**Europäisches Patentamt**

(19) **European Patent Office**

**Office européen des brevets**

(11) Numéro de publication: **0 011 260**
**B1**

(12) **FASCICULE DE BREVET EUROPEEN**

(45) Date de publication du fascicule du brevet: **30.11.83**

(51) Int. Cl.³: **H 02 P 8/00,** G 05 B 19/40

(21) Numéro de dépôt: **79104430.8**

(22) Date de dépôt: **12.11.79**

(54) **Procédé de positionnement d'un mobile.**

(30) Priorité: **17.11.78 FR 7832501**

(43) Date de publication de la demande:
**28.05.80 Bulletin 80/11**

(45) Mention de la délivrance du brevet:
**30.11.83 Bulletin 83/48**

(84) Etats contractants désignés:
**AT BE CH DE FR GB IT LU NL SE**

(56) Documents cités:
**DE - A - 2 042 903**
**FR - A - 1 408 169**
**GB - A - 1 449 303**
**US - A - 3 588 661**

(73) Titulaire: **COMPAGNIE GENERALE D'AUTOMATISME C.G.A. ALCATEL Société anonyme dite:**
**12, rue de la Baume**
**F-75008 Paris (FR)**

(72) Inventeur: **Estrabaud, Stéphane**
**99, Avenue St Laurent**
**F-91400 Orsay (FR)**
Inventeur: **Nourigat, Gérard**
**22, rue des Bosquets**
**F-78470 Saint Remy Les Chevreuses (FR)**

(74) Mandataire: **Weinmiller, Jürgen et al,**
**Zeppelinstrasse 63**
**D-8000 München 80 (DE)**

Courier Press, Leamington Spa, England.

Procédé de positionnement d'un mobile

L'invention concerne un procédé de positionnement d'un mobile commandé par un moteur pas-à-pas, lorsque le mobile dans l'intervalle entre pas, est susceptible d'osciller autour d'une position d'équilibre, selon le préambule de la revendication.

L'invention sera exposée en prenant l'exemple d'un mouvement de rotation, tel que le mouvement d'un tambour d'imprimante, mais elle est applicable à tous les déplacements pas-à-pas, dès que le mobile déplacé est susceptible de décrire des oscillations sensiblement représentables par un système du deuxième ordre, d'amortissement plus faible que l'amortissement critique.

En effet, si les intervalles ne sont pas choisis spécialement le mouvement oscillatoire qui suit la dernière impulsion, et qui peut être dû, par exemple, à l'inertie du mobile et à l'élasticité des organes mécaniques de transmission, peut se poursuivre pendant un temps relativement long, pendant lequel la position du mobile varie continuellement autour de la position souhaitée, sans s'y arrêter. Il est connu de pallier cet inconvénient grâce à un dispositif amortisseur, mais celui-ci, pour être efficace, doit pouvoir absorber une énergie appréciable, ce qui augmente son poids, son encombrement, son coût, et impose des contraintes supplémentaires au moteur.

Le DE—A—2 042 903 cherche à obtenir ce résultat en définissant l'intervalle de temps séparant l'avant dernière impulsion de la dernière impulsion mais il est clair que si l'on suit l'enseignement de ladite demande, le but n'est atteint que dans des cas très particuliers, car il faut à la fois que l'inertie du rotor ait une valeur adaptée et de plus que le nombre total d'impulsions soit suffisant par rapport au coefficient d'amortissement pour amener le mobile à un état de régime permanent avant l'avant-dernière impulsion, condition qui n'apparait pas explicitement dans la description mais qui résulte de l'analyse du problème.

L'invention a donc pour objet un procédé de positionnement d'un mobile d'une première position à une seconde position à l'aide d'un moteur pas à pas commandé par une suite finie d'impulsions, ledit mobile étant susceptible d'oscillations autour de son point d'équilibre, les intervalles de temps séparant lesdites impulsions étant choisis en fonction de la pseudopériode et de l'amortissement de l'oscillation de telle façon que la dernière impulsion soit appliquée au moteur au moment où l'oscillation consécutive à l'ensemble des impulsions précédentes amène le mobile sensiblement à la position finale souhaitée et avec une vitesse sensiblement nulle, caractérisé en ce que les impulsions autres que la dernière et la première sont appliquées à des moments tels que le point figuratif du déplacement du mobile, consécutivement à une impulsion, représenté dans le plan de phase centré sur la position d'équilibre consécutive à ladite impulsion, est sensiblement situé sur la spirale passant par le point de vitesse nulle et d'abscisse égale à l'amplitude du dernier pas.

L'invention sera mieux comprise à la lumière de la description d'un exemple de réalisation de l'invention faite ci-après en regard du dessin annexé dans lequel:

La figure 1 représente schématiquement une imprimante à tambour comme exemple d'application du procédé selon l'invention.

La figure 2 montre un diagramme des oscillations x du tambour en fonction du temps pour deux séries distinctes de quatre impulsions dont l'une correspond au procédé selon l'invention.

La figure 3 montre un abaque permettant de déterminer les intervalles entre les impulsions.

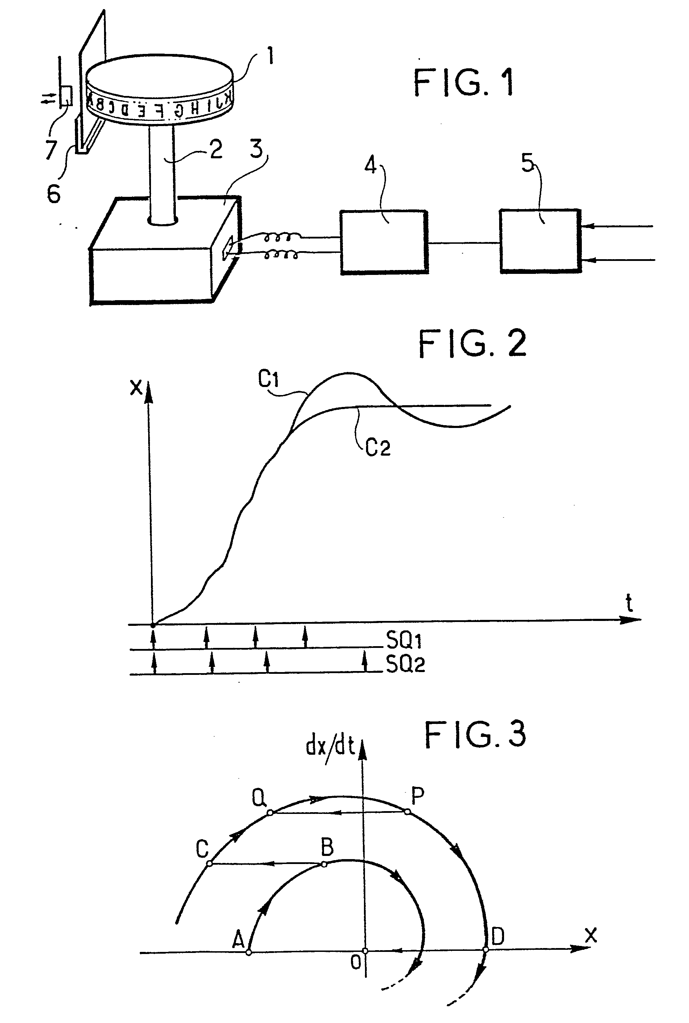

En se reportant maintenant à la figure 1, l'imprimante comprend un tambour 1 portant un jeu de caractère en relief. Il est monté sur un axe 2 entraîné par un moteur pas-à-pas 3. Le moteur est alimenté par un générateur d'impulsions 4, chaque impulsion pouvant faire tourner le tambour d'un angle égal à l'intervalle entre deux caractères successifs, ou à une fraction entière de celui-ci. Le générateur 4 est sous la dépendance d'un cadenceur 5 qui détermine le moment où chaque impulsion doit être appliquée au moteur. Le cadenceur 5, informé du nombre de pas séparant l'état initial de l'état final souhaité, peut avantageusement comporter un oscillateur d'horloge à fréquence élevée par rapport à la fréquence des oscillations naturelles du mobile, et un diviseur programmé fournissant des impulsions à des intervalles de temps successifs obtenus par division de la fréquence d'horloge. Le cadenceur reçoit aussi un ordre de départ qui déclenche la première impulsion.

L'imprimante comporte également des moyens 6 d'amenée et de maintien du papier, ainsi qu'un marteau 7 qui vient frapper le papier contre le caractère lorsque le tambour est arrêté dans la position désirée, et un ruban encreur non représenté sur la figure.

Le tambour 1 constitue avec l'axe 2 un système masse-ressort très peu amorti, dont les oscillations, selon l'art antérieur, obligent à différer la commande du marteau après la dernière impulsion de positionnement jusqu'à l'amortissement du mouvement, sous peine de frapper à côté du caractère, ou de voir celui-ci glisser durant la frappe, ce qui limite sévèrement la cadence d'impression. Au contraire, selon l'invention, le tambour se trouvant, juste avant la dernière impulsion, au voisinage de la position voulue et avec une vitesse faible, ladite dernière impulsion ne vise qu'à annuler l'énergie potentielle élastique résiduelle. L'énergie cinétique étant elle-même faible, l'oscillation finale présente une amplitude négligeable et la frappe peut avoir lieu sans délai.

On a représenté, sur la figure 2, l'évolution de la rotation "x" du tambour en fonction du temps "t", pour deux séquences de quatre impulsions dont la première (SQ 1) est constituée d'intervalles égaux, alors que la seconde (SQ 2) comporte des intervalles différents. On voit sur les courbes correspondantes C 1 et C 2 que la stabilité du tambour peut être obtenue bien plus rapidement lorsque les intervalles sont choisis, selon la séquence SQ 2, conformément à l'invention, de façon que la dernière impulsion se produise au moment où le mobile est proche de sa position finale souhaitée avec une vitesse voisine de zéro.

La figure 3 représente un abaque permettant de faciliter le choix de ces intervalles, et notamment d'assurer aisément la compatibilité entre les deux conditions, respectivement position proche de la position finale souhaitée et vitesse faible, cette compatibilité imposant une relation entre les intervalles autres que le dernier.

Dans cette figure 3 on a représenté dans le plan de phase le mouvement d'oscillation libre d'un système du second ordre. On a porté en abscisse la position x du mobile, et en ordonnées la vitesse dx/dt. L'amortissement n'est pas forcément linéaire, mais il est supposé ne dépendre que de x et dx/dt, ce qui assure l'unicité des trajectoires. L'expérience a montré que cette hypothèse pouvait être considérée comme une première approximation tout-à-fait satisfaisante dans de nombreux cas. On doit noter d'ailleurs que les paramètres physiques et les intervalles de temps peuvent dans une certaine mesure s'écarter des hypothèses idéales et des intervalles calculés rigoureusement selon l'abaque de l'invention. En effet, si au moment où la dernière impulsion est appliquée il reste un léger écart par rapport à la position finale souhaitée et une légère vitesse résiduelle, les énergies (potentielle et cinétique) correspondantes sont faibles, ce qui permet une immobilisation suffisante par un dispositif relativement léger. On a trouvé ainsi que le simple appui du papier frappé par le marteau sur le tambour pouvait être utilisé pour éviter le glissement du caractère.

Dans les conditions de l'hypothèse, le point représentatif du mouvement d'oscillation est astreint à se déplacer, dans le sens trigonométrique négatif, sur une spirale dont les coordonnées paramétriques se déduisent de façon connue des paramètres physiques du dispositif, pseudopériode et amortissement. Le choix des conditions initiales détermine, dans la famille des spirales, celle qui est effectivement suivie.

Il est possible de tracer, sur une même figure, les trajectoires correspondant aux différents intervalles entre impulsions, à condition de porter en abscisses non pas la position absolue du mobile, mais l'écart algébrique entre celle-ci et la position d'équilibre consécutive à l'ensemble des impulsions passées, à l'exclusion des impulsions à venir. Dans cette représentation, chaque impulsion se traduit par une translation rapide du point représentatif dans une direction horizontale, de droite à gauche, et de longueur égale au pas unitaire. En pratique, le pas unitaire est constant, et égal au déplacement total divisé par le nombre de pas, mais rien ne s'oppose en théorie à ce que les pas soient inégaux, ce qui ne ferait pas sortir du cadre de l'invention. Toutes les trajectoires de spirales ont le même sens, et la trajectoire totale est constituée d'une alternance de segments de spirale reliés par des segments de droite horizontaux. Les spirales peuvent être graduées en temps, unités absolues ou plus commodément en unités réduites rapportées à la pseudopériode, et la différence de graduation entre origine et extrémité d'un même segment de spirale représente la durée de l'intervalle entre impulsions correspondantes.

La figure 3 montre un exemple de construction graphique conforme à cette représentation. Le point figuratif, initialement à l'origine O des coordonnées, passe dès la première impulsion en A, point dont les coordonnées sont-X et o, la lettre X représentant le pas unitaire. Il se déplace ensuite sur la spirale passant par A (spirale initiale) dans le sens trigonométrique négatif. Au bout d'un certain temps, le point figuratif est en B, et la deuxième impulsion est appliquée. Le point figuratif se déplace alors rapidement selon une translation égale à-X, qui l'amene en C. Sur la figure, le point C est situé sur la spirale passant par le point D de coordonnées respectives + X et o (spirale finale), ce qui permet, en appliquant la troisième impulsion au moment où le point figuratif est en D, de l'amener à nouveau en O, ce qui conduit bien, conformément à l'invention, à un déplacement de trois pas se terminant à la position souhaitée et à vitesse nulle.

Si le nombre de pas est supérieur à trois, un ou plusieurs segments de droite supplémentaires devront être intercalés, l'extrémité de chacun et l'origine du suivant étant situées sur un même spirale. Le problème comporte donc en général une infinité de solutions, la première et la dernière spirale étant seules imposées. Dans une variante, préférée pour sa simplicité, mais donnée ici à titre non limitatif, on rejoindra la spirale finale dès que possible, et les segments de droite intermédiaires auront leurs deux extrémités sur celle-ci, comme en PQ sur la figure 3. L'avantage en est de permettre la réalisation d'un dispositif de positionnement selon l'invention avec un maximum de quatre valeurs différentes pour les intervalles entre impulsions, dès que le nombre de celles-ci est égal ou supérieur à quatre.

La réalisation matérielle de l'abaque se déduit immédiatement de la figure 3. Sur une feuille, on trace la spirale initiale et la spirale finale correspondant à l'amortissement, estimé ou mesuré, du mobile. Dans le cas, le plus courant, où le pas unitaire est constant, on le choisit comme unité de longueur, ce qui met les points A et D en — 1 et + 1 sur l'axe des x. Les spirales sont graduées en unités réduites de temps, rapportées à la pseudopériode, avec une origine quelconque. D'autres spirales de la famille pourront facultativement être tracées, si le problème posé justifie de faire appel à plus de quatre valeurs différentes d'intervalle, pour minimiser par exemple le temps total, ou pour évaluer l'incidence sur le résultat final d'une erreur sur les grandeurs physiques ou d'un arrondi sur les durées d'intervalle. D'autre part, un papier transparent portera un segment de droite horizontal de longueur unitaire, ou des segments de longueurs différentes si le pas n'est constant. On déplacera le papier transparent sur la feuille, en maintenant l'horizontalité, jusqu'à la matérialisation de la figure 3, et on lira les intervalles sur la graduation des spirales.

**Revendications**

1. Procédé de positionnement d'un mobile (1) d'une première position à une seconde position à l'aide d'un moteur pas-à-pas (3) commandé par une suite finie d'impulsions, ledit mobile étant susceptible d'oscillations autour de son point d'équilibre, les intervalles de temps séparant lesdites impulsions étant choisis, en fonction de la pseudopériode et de l'amortissement de l'oscillation de telle façon que la dernière impulsion soit appliquée au moteur à un moment où l'oscillation consécutive à l'ensemble des impulsions précédentes amène le mobile sensiblement à la position finale souhaitée et avec une vitesse sensiblement nulle, caractérisé en ce que les impulsions autres que la dernière et la première sont appliquées à des moments tels que le point figuratif du déplacement du mobile, consécutivement à une impulsion, représenté dans le plan de phase centré sur la position d'équilibre consécutive à ladite impulsion, est sensiblement situé sur la spirale passant par le point de vitesse nulle et d'abscisse égale à l'amplitude du dernier pas.

2. Procédé de positionnement d'un mobile selon la revendication 1, caractérisé en ce que les pas entre impulsions ont tous la même amplitude (pas unitaire).

**Patentansprüche**

1. Verfahren zum Positionieren eines beweglichen Körpers (1) von einer ersten Stellung in eine zweite Stellung mithilfe eines Schrittschaltmotors (3), der von einer endlichen Folge von Impulsen gesteuert ist, wobei der bewegliche Körper Schwingungen um seinen Gleichgewichtspunkt ausführen kann und die Zeitintervalle zwischen den Impulsen abhängig von der Pseudoperiode und der Dämpfung der Schwingung so gewählt werden, daß der letzte Impuls dem Motor in dem Zeitpunkt zugeführt wird, in dem die auf die vorhergehenden Impulse folgende Schwingung den Körper im wesentlichen in die gewünschte Endstellung bringt, und zwar mit einer Geschwindigkeit, die im wesentlichen null ist, dadurch gekennzeichnet, daß die Impulse mit Ausnahme des letzten und des ersten zu solchen Zeitpunkten angelegt werden, daß der die Verschiebung des Körpers darstellende Punkt aufgrund eines Impulses, dargestellt in der Phasenebene, die auf die Gleichgewichtsstellung nach dem Impuls zentriert ist, im wesentlichen auf der Spirale liegt, die durch den Punkt verläuft, dessen Geschwindigkeit null ist und dessen Abszisse gleich der Amplitude des letzten Schrittes ist.

2. Verfahren zum Positionieren eines beweglichen Körpers nach Anspruch 1, dadurch gekennzeichnet, daß die Schritte zwischen den Impulsen alle die gleiche Amplitude besitzen (Einheitsschritt).

**Claims**

1. A method for positioning a movable body (1) from a first position to a second position by means of a step by step motor (3) which is controlled by a limited series of pulses, said movable body being able to perform oscillations around its equilibrium point, the time intervals between the pulses being chosen in dependence of the pseudo-period and of the damp coefficient of the oscillation in such a way that the last pulse is applied to the motor at an instant in which the oscillation following to the set of preceding pulses brings the body perceptively to the desired final position and with a speed which is perceptively zero, characterized in that the pulses except the last and the first one are applied at instants such that the image point of displacement of the movable body after the application of a pulse and represented in the phase plane which is centered on the equilibrium position following to that pulse, is perceptively situated on the spiral which passes through the point of zero speed and of an abscissa value equal to the amplitude of the last step.

2. A method for positioning a movable body according to claim 1, characterized in that the steps between pulses are of the same amplitude (unit step).

# FIG. 1

# FIG. 2

# FIG. 3